# EUROPÄISCHE PATENTANMELDUNG

(11) **EP 1 193 580 A2**
(43) Veröffentlichungstag der Anmeldung: **03.04.2002**
(21) Anmeldenummer: 01122109.0
(22) Anmeldetag: 14.09.2001
(51) Int. Cl.: G05B 19/042

(54) **Gebersystem zur Lage-/Positionserfassung und/oder Geschwindigkeitserfassung und/oder Beschleunigungserfassung, darauf aufbauende Antriebsregelung sowie Verfahren zur Vernetzung einer Regelungseinheit mit einem oder mehreren Gebersystemen**

(30) Priorität: 27.09.2000 DE 10047924
(71) Anmelder: SIEMENS AKTIENGESELLSCHAFT, 80333 München (DE)
(72) Erfinder: Birk, Gunther, 91054 Erlangen (DE); Hahn, Ulrich, 90766 Fürth (DE); Spingler, Michael, 91074 Herzogenaurach (DE); Weidauer, Jens, Dr., 91315 Höchstadt (DE)

(57) **Zusammenfassung**

Nach der vorliegenden Erfindung werden eine analoge Auswerteschaltung, die Digitalisierung und die Umrechnung in physikalische Größen von der übergeordneten Regelung in das Gebersystem verlegt und die Regelung über ein synchrones Hochgeschwindigkeitsübertragungssystem mit diesem neuen Gebersystem verbunden. Über diese serielle Echtzeit-Geberschnittstelle wird eine Netzwerkfähigkeit des Übertragungssystems sowie eine einfachere Verkabelung ermöglicht.

## Beschreibung

Die Erfindung betrifft ein Gebersystem zur Lage-/Positionserfassung und/oder Geschwindigkeitserfassung und/oder Beschleunigungserfassung, eine Antriebsregelung auf Basis eines solchen Gebersystems und ein Verfahren zur Vernetzung einer Regelungseinheit mit einem oder mehreren solchen Gebersystemen.

Für die digitale Strom- und Drehzahlregelung von elektrischen Antrieben werden Informationen über die Lage bzw. Position, Geschwindigkeit u.ä. des Motors bzw. des Energiewandlers im jeweiligen Regelungstakt benötigt.

Da die obengenannten Regelungstakte fast immer oberhalb von 1 kHz liegen und eine minimale Totzeit zwischen der Erfassung dieser Istwerte und deren Verfügbarkeit in der Regelung gefordert ist, werden bei herkömmlichen Gebersystemen die Informationen als analoge Rohsignale zur Verfügung gestellt.

Diese analogen Rohsignale werden über aufwendig geschirmte Kabel zur Regelungselektronik transportiert, dort analog aufbereitet, in digitale Signale umgewandelt und in physikalische Größen umgerechnet bevor sie von der Regelung genutzt werden können.

Das bedeutet, die Regelungselektronik muss sowohl die dem Gebersystem entsprechende analoge Auswerteschaltung beinhalten, als auch über die genaue Kenntnis der Funktionsweise und Art des Gebers verfügen, um die Gebersignale verwerten zu können.

Weiterhin ist die analoge Signalübertragung aufwendig und sehr störanfällig. Häufig kann dabei eine Störung nicht vom Nutzsignal unterschieden werden. Bereits zum Einsatz kommende digitale Übertragungstechniken für andere Anwendungszwecke in der Industrieautomatisierung (z.B. EnDat, SSI, Hyperface oder Profibus) für Gebersignale erfüllen die hohen Anforderungen bzgl. Taktrate und Totzeit der Strom- und Drehzahlregelungen nicht.

Aufgabe der vorliegenden Erfindung ist es daher, ein Gebersystem für eine sichere, flexible und echtzeitfähige Istwertübertragung zu schaffen.

Gemäß der vorliegenden Erfindung wird diese Aufgabe durch ein Gebersystem zur Lage- oder Positionserfassung und/oder Geschwindigkeitserfassung mit folgenden Merkmalen gelöst:
- einem Signalgeber, insbesondere auf magnetischer oder optischer Basis, zur Erzeugung eines analogen Gebersignals,
- einer Auswerteschaltung für das analoge Gebersignal
- einem Analog/Digital-Wandler zur Umsetzung des ausgewerteten analogen Gebersignals in eine digitale Ausgabegröße,
- einem Rechenmittel zur Umsetzung in eine digitale physikalische Ausgabegröße, insbesondere in einen Geschwindigkeitswert oder Beschleunigungswert oder Positionswert, und
- einer Ausgabeschnittstelle zur Übertragung der digitalen physikalischen Ausgabegröße an eine übergeordnete Verarbeitungseinheit zu synchronen deterministischen Zeitpunkten, insbesondere zu einem Reglertakt der übergeordneten Verarbeitungseinheit.

Besonders kostengünstig und effektiv lässt sich das Gebersystem herstellen und in einen Kommunikationsverbund einbinden, wenn die synchrone Ausgabeschnittstelle als serielle Schnittstelle ausgeprägt ist.

Wenn die synchrone Schnittstelle als Bussystem ausgeprägt ist, dann lassen sich besonders einfache Antriebsregelungen aufbauen, die über eine Vielzahl von gekoppelten Achsen verfügen können, z.B. numerisch gesteuerte Handhabungsmaschinen wie Werkzeugmaschinen und Roboter.

Dabei können in einem erfindungsgemäßen Gebersystem sowohl als Resolver oder als hochauflösende optische Geber mit und ohne Multiturnstufe ausgeprägte Signalgeber eingesetzt werden. Beliebige andere Technologien lassen sich analog einsetzen.

Die Funktionsweise solcher Signalgeber ist unter anderem in dem Fachbuch "Moderne Stromrichterantriebe" von P.F. Brosch, 1. Aufl., Würzburg: Vogel-Verlag, 1989, Kapitel 7.3.3, Seiten 184ff, dargestellt.

Mit dem erfindungsgemäßen Gebersystem lässt sich eine gegenüber einer herkömmlichen Auswertung von analogen Geberrohsignalen besonders einfache und störfeste Antriebsregelung mit einer Regelungseinheit bilden, wobei das Gebersystem und die Regelungseinheit über die synchrone Schnittstelle des Gebersystems miteinander kommunizieren, indem digitale physikalische Ausgabegrößen des Gebersystems der Regelungseinheit zu Regelungszwecken als Geberistwerte im Regelungstakt und synchron dazu vorgebbar sind.

Dabei hat es sich als vorteilhaft erwiesen, wenn die synchrone Schnittstelle als Kommunikationssystem mit einer Master-Slave-Struktur ausgeprägt ist, in dem die Regelungseinheit ein Master und das Gebersystem ein Slave ist. Dadurch lassen sich besonders einfach mehrere Gebersysteme mit einer Regelungseinheit betreiben.

Damit lassen sich durch das Gebersystem über die synchrone Schnittstelle auch Temperatur- und/oder Druck- und/oder Durchflussistwerte eines Antriebes als digitale, physikalische Ausgabegrößen an die Regelungseinheit übermitteln.

Die der Erfindung zugrunde liegende Aufgabe wird gemäß den voranstehenden Ausführungen auch durch ein Verfahren zur Vernetzung einer Regelungseinheit mit einem oder mehreren Gebersystemen mit folgenden Verfahrensschritten gelöst:
- Entkopplung der jeweiligen Geberphysik und der jeweiligen Auswerteschaltung von der Regelungselektronik und Verlagerung in das jeweilige Gebersystem und
- Kommunikation zwischen der Regelungseinheit und jedem Gebersystem durch ein allgemeines digitales Übertragungsprotokoll.

Indem nach der vorliegenden Erfindung eine analoge Auswerteschaltung, die Digitalisierung und die Umrechnung in physikalische Größen von der übergeordneten Regelung in das Gebersystem verlegt werden und die Regelung über ein synchrones Hochgeschwindigkeitsübertragungssystem mit diesem neuen Gebersystem verbunden wird, lassen sich unter anderem folgende Vorteile ereichen:
- es lassen sich für eine nun mögliche digitale Übertragung deutlich billigere Kabel verwenden als bei einer störanfälligen analogen Übertragung von Rohsignalen,
- die Datenübertragungssicherheit ist wesentlich höher und kann über Sicherungsmechanismen wie CRC-Summen (CRC steht für cyclic redundancy check) überprüfbar gemacht werden,
- durch die Entkopplung der Geberphysik und der nötigen Auswerteschaltung von der Regelungselektronik durch ein allgemeines digitales Übertragungsprotokoll können Innovationen bei Gebersystemen und Regelungssystemen unabhängig voneinander erfolgen,
- die Anordnung der Rohsignalauswertung im Gebersystem ermöglicht es, zusammen mit der digitalen Signalverarbeitung weitere Daten wie Geschwindigkeit, Beschleunigung, aber auch zusätzliche Istwerte wie Temperatur, Druck usw. über das Übertragungsprotokoll der Regelung zur Verfügung zu stellen,
- das Übertragungsprotokoll erlaubt die Identifizierung und Diagnose des Gebersystems und damit eine automatische Anpassung in der Regelungs-Software an die zur Verfügung gestellten Daten und darüber hinaus eine Erkennung von Geberfehlern,
- die so erreichte Netzwerkfähigkeit des Übertragungssystems erlaubt eine einfachere Verkabelung durch Aneinanderreihung.

Weitere Vorteile und Details der vorliegenden Erfindung ergeben sich anhand der folgenden Beschreibung eines Ausführungsbeispiels in Verbindung mit den Figuren. Dabei sind Elemente mit gleicher Funktionalität mit den gleichen Bezugszeichen gekennzeichnet. Es zeigt:
- FIG 1: ein Kommunikationsnetzwerk mit einer Antriebsregelung und drei erfindungsgemäßen Gebersystemen und
- FIG 2: Ein Blockschaltbild eines Gebersystems auf Basis eines Resolvers.

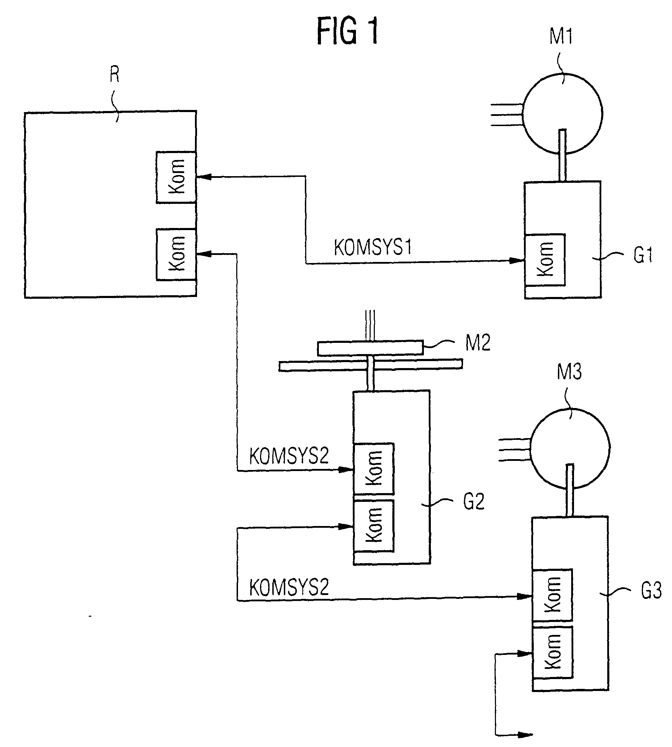

Die Darstellung nach FIG 1 zeigt anhand einer Antriebsregelung für drei Motoren M1 bis M3 ein Kommunikationsnetzwerk mit zwei unterschiedlichen Kommunikationssystemen KOMSYS1 und KOMSYS2, über das die den Motoren zugeordneten Gebersysteme G1 bis G3 mit einer übergeordneten Regelungseinheit R kommunizieren. Während die Motoren M1 und M3 Rotationsantriebe sind, stellt der Motor M2 einen Linearmotor dar. Bei der gezeigten Anordnung kann es sich beispielsweise um drei gekoppelte Antriebe einer industriellen Bearbeitungsmaschine handeln, etwa um eine Werkzeugmaschine oder einen Roboter.

Nach der Erfindung wird durch die Verwendung eines hochleistungsfähigen synchronen Übertragungssystems KOMSYS1 und KOMSYS2 die gesamte analoge Gebersignalauswertung in das Gebersystem G1 bis G3 verlegt und damit eine von der Geberphysik entkoppelte Verfügbarkeit von physikalischen Größen, wie Position, Drehzahl, Beschleunigung, Temperatur, Druck, Durchfluss, usw. in einer Regelungselektronik erreicht. Dabei ist eine Verfügbarkeit von Echtzeitgeberdaten auch bei Regelungstakten weit oberhalb von 1 kHz gewährleistet, indem Datenzykluszeiten von deutlich kleiner 1 ms möglich sind. Die Totzeit für die Übertragung der synchronen Daten eines Gebers sind deutlich geringer als 20 µsec.

Jeder Teilnehmer in diesem Netzwerk, sei es die Regelungseinheit R oder ein Gebersystem G1 bis G3, verfügt über jeweilige Kommunikationsbausteine Kom, über die diese Teilnehmer verbunden sind. Dabei kann es sich auch um eine Busstruktur handeln, über die die Kommunikation erfolgt.

Indem ein Kommunikationsteilnehmer zwei oder mehrere solcher Kommunikationsbausteine Kom aufweist, lässt sich eine Vernetzung zwischen mehreren Komponenten erreichen. Das Kommunikationssystem (hier KOMSYS2) wird dadurch an weitere Teilnehmer weitergeführt. Die Kommunikationsbausteine Kom arbeiten das digitale Übertragungsprotokoll ab und ermöglichen so die Versorgung der Regelungseinheit R mit den notwendigen Geberistwerten im Regelungstakt.

Ein Beispiel für ein solches geeignetes echtzeitfähiges synchrones Übertragungssystem stellt ein Kommunikationsnetzwerk auf Basis einer Ethernet-Physik dar, welches über ein geeignetes digitales Übertragungsprotokoll zu einem zeitlich deterministischen Übertragungssystem ertüchtigt wird.

Da es bei der in FIG 1 gezeigten Anwendung sowohl auf eine hochgenaue Einhaltung der Echtzeitbedingung als auch auf eine hohe Sicherheit der Übertragung ankommt, wird die genormte Übertragungsschicht 2 (Telegrammrahmen und Zugriffsverfahren) des (Fast)-Ethernet, die diese Anforderungen nicht erfüllt, durch ein neues Daten-Protokoll und eine neue Zugriffsteuerung vollständig neu definiert und damit die Ethernet-Physik als Basis für eine Echtzeitkommunikation zwischen beispielsweise Antriebskomponenten genutzt. Damit kann die Kommunikation zwischen der Regelungseinheit R und den Gebern G1 bis G3 realisiert werden.

Bezüglich einer Synchronisation zwischen einem Master, z.B. der Regelungseinheit R, und Slaveeinheiten, z.B. den erfindungsgemäßen Gebersystemen G1 bis G3, erweist es sich als vorteilhaft, wenn eine Synchronisierung der Slaveeinheiten auf die Mastereinheit erfolgt, indem jede Slaveeinheit über einen jeweiligen Zeitzähler mit einer vorgegebenen Gesamtzykluszeit getaktet wird, der zyklisch durch den Empfang einer jeweiligen von der Mastereinheit bestimmten Slave-spezifischen Synchronisationsinformation gesetzt wird.

Es kommt somit eine Master-Slave-Kommunikationsarchitektur zum Einsatz. Um einen zyklischen Datenaustausch mit gleichen Abtastzeitpunkten realisieren zu können, wird eine gemeinsame Zeitbasis für den Master und alle Slaves hergestellt. Die Synchronisierung der Slaves auf den Master erfolgt durch speziell ausgezeichnete, zeitlich definierten Telegramme des Masters an die Slaves und individuell parametrierte Zeitzähler in den Slaves.

Dabei können Nutzdatentelegramme und spezielle Synchronisationstelegramme, die die jeweiligen Synchronisationsinformationen beinhalten, übertragen werden. Alternativ kann die Synchronisationsinformation auch in ein ausgezeichnetes Nutzdatentelegramm integriert sein.

Dabei lässt sich die Stabilität des Kommunikationssystems weiter steigern, wenn jeder Zeitzähler einer Slaveeinheit auch bei Ausbleiben der jeweiligen Synchronisationsinformation nach Ablauf der vorgegebenen Gesamtzykluszeit selbsttätig einen neuen Zyklus startet.

Für den Sende- und Empfangsbetrieb bei der zyklischen Datenübertragung kommt beispielsweise ein Zeitschlitz-Zugriffsverfahren zum Einsatz, das vom Master im Netzwerk initiiert wird und eine totzeit-optimale Datenübertragung erlaubt. Dadurch können die Telegramme bzgl. gestörter, verfrühter oder verspäteter Übertragung präzise überwacht werden.

Dazu besitzt zur Initialisierung ausschließlich die Mastereinheit Sendeberechtigung auf dem Kommunikationssystem und teilt jeder Slaveeinheit, die ausschließlich Antwortberechtigung besitzt, über ein entsprechendes Slave-spezifisches Telegramm neben der Gesamtzykluszeit mit, in welchen Zeitschlitzen innerhalb der Gesamtzykluszeit die jeweilige Slaveeinheit welche Telegramme von der Mastereinheit empfangen wird und in welchen Zeitschlitzen sie ihre Telegramme senden soll.

Dabei hat es sich als vorteilhaft erwiesen, wenn jeder Slaveeinheit in der Initialisierungsphase der jeweilige Synchronisationszeitpunkt mitgeteilt wird.

Wenn in jeder Slaveeinheit, eben dem jeweiligen Gebersystem G1 bis G3, zu einem gemeinsamen Zeitpunkt, insbesondere zu einem Zyklusbeginn, jeweilige Augenblickswerte (Lageistwerte oder Geschwindigkeitsistwerte etc.) gespeichert werden, lässt sich eine gleichzeitige und äquidistante Abtastung für die Regelungseinheit R erreichen.

Außerdem lassen sich in jedem von der Mastereinheit an eine Slaveeinheit übermittelten Telegramm Kontrollinformationen vorsehen, mit denen sich direkt in der Slaveeinheit vorgesehene sicherheitsgerichtete Funktionen aktivieren lassen.

Die Nutzdaten können in einem Telegrammrahmen transportiert werden, der neben der Slave-Adressierung und Telegrammlängeninformation die Absicherung der Datenintegrität mittels beispielsweise einer CRC-Prüfsumme und weitere sicherheitsrelevante Datenbereiche zur Verfügung stellt. Die Daten im Telegrammrahmen können nicht nur von einem Applikationsprozessor, sondern auch von einem Kommunikationsbaustein KOM ausgewertet werden.

Dazu sendet jede Slaveeinheit mit jedem Telegramm ein Signal an die Mastereinheit aus. Die Mastereinheit setzt dann bei Ausbleiben dieses Signals die entsprechende Slaveeinheit kontrolliert still.

Obwohl die zur Anwendung kommende Übertragungstechnik nach dem Ethernet-Standard prinzipiell nur Punkt-zu-Punkt-Verbindungen erlaubt, kann wie bei (Fast) Ethernet Netzen auch durch die Verwendung von Netzknoten (sogenannte HUBs) die Bildung von Netzwerken ermöglicht werden, indem mehrere oder jeder Kommunikationsteilnehmer über einen Schaltungsteil zur Bildung von Netzknoten verfügt, der zur Weiterleitung der Telegramme in Richtung einer anderen Mastereinheit oder weiterer Slaveeinheiten dient, wobei eine Kommunikation zwischen Kommunikationsteilnehmern über Netzknoten ebenfalls nach der vorangehend beschriebenen Vorgehensweise erfolgt.

Mit Hilfe der im vorangehenden beschriebenen Vorgehensweise lässt sich auf Basis eines Kommunikationssystems mit Ethernet-Physik eine Echtzeitkommunikation erreichen. Dabei können auch hierarchische Netzwerke mit über Netzknoten verbundenen Punkt-zu-Punkt-Verbindungen mit Ethernet-Physik zur Durchführung einer Echtzeitkommunikation in größeren Netztopologien erstellt werden.

Dieses eignet sich auch zur Vernetzung bzw. Kopplung eines verteilten Antriebssystems, indem eine Regelungseinheit R als Mastereinheit eines Kommunikationssystems KOMSYS1 oder KOMSYS2 dient, welches mindestens ein zugeordnetes Gebersystem G1, G2, G3 als Slaveeinheit aufweist.

Indem die Kommunikation zwischen den Antriebskomponenten wie Regelungseinheit R und Gebersystemen G1 bis G3, aber auch weiteren Komponenten wie Leistungsteilen und Bewegungssteuerungen durch ein vorhandenes Hochleistungs-Übertragungssystem aus der Bürokommunikation mittels vollständig neuem Protokoll, Master-Slave-Synchronisation und Zeitschlitz-Zugriffsverfahren zur Echtzeitfähigkeit ertüchtigt werden, lassen sich auch sehr zeitkritische Anwendungen mit einem Regelungstakt oberhalb von 1 kHz realisieren. Die totzeitminimale Ausprägung erlaubt zudem das Schließen von hochdynamischen Regelkreisen über das serielle Kommunikationssystem.

Selbstverständlich lassen sich zur Realisierung der erfindungsgemäßen Gebersysteme G1 bis G3 und deren Vernetzung mit einer Regelungseinheit R auch andere Kommunikationsnetzwerke als das vorangehend beispielhaft beschriebene verwenden, vorausgesetzt, dass die Bandbreite der Übertragung die Kommunikation im Regelungstakt und totzeitoptimal gewährleistet.

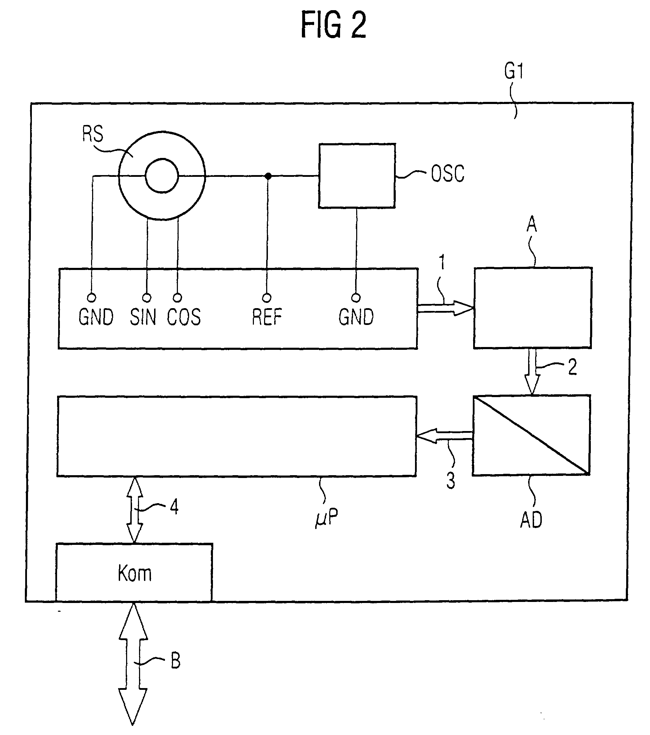

Die Darstellung nach FIG 2 zeigt den Aufbau eines erfindungsgemäßen Gebersystems anhand eines Blockschaltbilds. Dabei ist ein signalgebendes Element auf Basis eines Transmitter-Resolvers RS zugrunde gelegt. Selbstverständlich lassen sich genauso gut Signalgeber auf einem anderem technischen Prinzip wie etwa hochauflösende optische Systeme oder magnetische Systeme verwenden.

Der Resolver RS ist mit einem Oszillator OSC zur Generierung von Referenzsignalen REF beschaltet und liefert nach Demodulation Läuferlagedaten in Form von Sinus SIN und Cosinus COS Signalen. Zusätzlich verfügen der Resolver OSC und der Referenzoszillator OSC über Masseanschlüsse GND, über die beide Elemente auf ein gleiches Bezugspotential gebracht werden.

Die so generierten analogen Gebersignale 1, also die SIN und COS Signale werden einer Auswerteschaltung A zugeführt, etwa in Form eines geeignet programmierten Speicherbausteins zur Sinusbewertung. Die ausgewerteten Gebersignale 2 werden anschließend in einem Analog-Digital-Wandler AD in digitale Daten 3 umgewandelt und einer Recheneinheit zugeführt. Eine Darstellung der so erhaltenen Signale auf Basis eines Resolvers RS sind beispielhaft in dem bereits zitierten Fachbuch "Moderne Stromrichterantriebe" von P.F. Brosch, 1. Aufl., Würzburg: Vogel-Verlag, 1989, auf S.187 dargestellt.

Die Steuer-/Recheneinheit µP dient der Umsetzung der digitalen Gebersignale 3 in eine digitale physikalische Ausgabegröße 4. Diese kann in einem Geschwindigkeitswert und/oder Beschleunigungswert und/oder Lage-/Positionswert bestehen. Der so bestimmte digitale Wert, der eine physikalische Größe darstellt, die die Regelungseinheit R zur Ansteuerung des jeweiligen dem Gebersystem G1 zugeordneten Motors M1 benötigt, wird anschließend einer synchronen Ausgabeschnittstelle Kom zur Übertragung an die übergeordnete Verarbeitungseinheit (hier die Regelungseinheit R) zugeführt.

Über diese Kommunikationsschnittstelle bzw. den Kommunikationsbaustein Kom wird das jeweils realisierte digitale Übertragungsprotokoll abgearbeitet, das z.B. so wie die voranstehend beschriebene Übertragung auf Basis einer Ethernet-Physik aussehen kann. Damit lassen sich der Regelungseinheit R die benötigten physikalischen Werte als digitale Daten über die Echtzeit-Geberschnittstelle, etwa ein Kommunikationssystem B, zuleiten. Die Regelungseinheit R braucht dafür keinerlei Kenntnis über die Geberphysik oder über die Auswertung von dessen signalgebenden Elementen besitzen. Dadurch lassen sich unterschiedliche Gebersysteme an ein und derselben Regelungseinheit R betreiben, ohne dass letztere speziell für eine bestimmte Geberphysik ertüchtigt werden muss.

## Patentansprüche

1. Gebersystem (G1, G2, G3) zur Lage- oder Positionserfassung und/oder Geschwindigkeitserfassung und/oder Beschleunigungserfassung mit
- einem Signalgeber (RS), insbesondere auf magnetischer oder optischer Basis, zur Erzeugung eines analogen Gebersignals (1),
- einer Auswerteschaltung (A) für das analoge Gebersignal (1),
- einem Analog/Digital-Wandler (AD) zur Umsetzung des ausgewerteten analogen Gebersignals (2) in eine digitale Ausgabegröße (3),
- einem Rechenmittel (µP) zur Umsetzung in eine digitale physikalische Ausgabegröße (4), insbesondere in einen Geschwindigkeitswert oder Beschleunigungswert oder Lage-/ Positionswert, und
- einer Ausgabeschnittstelle (Kom) zur Übertragung (B) der digitalen physikalischen Ausgabegröße (4) an eine übergeordnete Verarbeitungseinheit (R) zu synchronen deterministischen Zeitpunkten, insbesondere zu einem Reglertakt der übergeordneten Verarbeitungseinheit (R).

2. Gebersystem zur Lage- und/oder Geschwindigkeitserfassung nach Anspruch 1, wobei die synchrone Ausgabeschnittstelle als serielle Schnittstelle ausgeprägt ist.

3. Gebersystem zur Lage- und/oder Geschwindigkeitserfassung nach Anspruch 1 oder 2, wobei die synchrone Schnittstelle als Bussystem (B, KOMSYS1, KOMSYS2) ausgeprägt ist.

4. Gebersystem zur Lage- und/oder Geschwindigkeitserfassung nach einem der vorangehenden Ansprüche, wobei der Signalgeber als Resolver (RS) oder als optischer Encoder ausgeprägt ist.

5. Antriebsregelung mit einem Gebersystem (G1, G2, G3) nach einem der vorangehenden Ansprüche und mit einer Regelungseinheit (R), die über die synchrone Schnittstelle (Kom) des Gebersystems (G1, G2, G3) miteinander kommunizieren, indem digitale physikalische Ausgabegrößen (4) des Gebersystems (G1, G2, G3) der Regelungseinheit (R) zu Regelungszwecken als Geberistwerte im Regelungstakt, insbesondere totzeitminimal und zu deterministischen Zeitpunkten, vorgebbar sind.

6. Antriebsregelung nach Anspruch 5, wobei die synchrone Schnittstelle als Kommunikationssystem (B, KOMSYS1, KOMSYS2) mit einer Master-Slave-Struktur ausgeprägt ist, in dem die Regelungseinheit (R) ein Master und das Gebersystem (G1, G2, G3) ein Slave ist.

7. Antriebsregelung nach Anspruch 5 oder 6, wobei durch das Gebersystem (G1, G2, G3) über die synchrone Schnittstelle (Kom) auch Temperatur- und/oder Druck- und/oder Durchflussistwerte eines Antriebes als digitale, physikalische Ausgabegrößen (4) an die Regelungseinheit (R) übermittelbar sind.

8. Verfahren zur Vernetzung einer Regelungseinheit (R) mit einem oder mehreren Gebersystemen (G1, G2, G3) mit folgenden Verfahrensschritten:
- Entkopplung der jeweiligen Geberphysik (SIN, COS, REF, GND) und der jeweiligen Auswerteschaltung (A) von der Regelungselektronik und Verlagerung in das jeweilige Gebersystem (G1, G2, G3) und
- Kommunikation (KOMSYS1, KOMSYS2) zwischen der Regelungseinheit (R) und jedem Gebersystem (G1, G2, G3) durch ein digitales Übertragungsprotokoll (Kom).
